# EUROPÄISCHE PATENTSCHRIFT

(11) **EP 2 531 340 B1**
(45) Veröffentlichungstag und Bekanntmachung des Hinweises auf die Patenterteilung: **04.06.2014**
(21) Anmeldenummer: 11701628.7
(22) Anmeldetag: 28.01.2011
(51) Int. Cl.: B29C 55/02, B29C 55/18, B29C 59/04, B29C 59/00, B29C 55/00

(54) **Steife Folie mit hoher Durchstoßfestigkeit für Verpackungen und technische Anwendungen und Verfahren zu ihrer Herstellung**
Rigid film with high perforation resistance for packaging and technical applications and method for the production thereof
Feuille inflexible dotée d'une meilleure résistance à la percée pour emballages et applications techniques et procédé pour sa fabrication

(30) Priorität: 05.02.2010 EP 10001214
(43) Veröffentlichungstag der Anmeldung: 12.12.2012
(73) Patentinhaber: RKW SE, 67227 Frankenthal (DE)
(72) Erfinder: GREFENSTEIN, Achim, Dr., 67122 Altrip (DE); BRANDMAIER, Florian, 83059 Kolbenmoor (DE); MAIER, Leonhard, 83547 Babensham (DE)
(74) Vertreter: Wagner, Jutta
(86) Internationale Anmeldenummer: PCT/EP2011/000395
(87) Internationale Veröffentlichungsnummer: WO 2011/095303

(56) Entgegenhaltungen:
- EP-A1- 1 716 830
- EP-A2- 0 452 813
- WO-A1-00/58090
- WO-A1-01/30907
- DE-A1- 3 817 223
- GB-A- 1 087 036
- GB-A- 1 276 023
- US-A- 5 024 799

## Beschreibung

Die vorliegende Erfindung betrifft Folien mit hoher Steifigkeit und hoher Durchstoßfestigkeit, die sich insbesondere für Verpackungen und andere, technische Anwendungen eignen.

Ferner betrifft die Erfindung Verfahren zur Herstellung derartiger Folien.

Eine immer weitere Verringerung der Foliendicke wird bei vielen Verpackungsanwendungen und auch der Anwendung als Oberflächenschutzfolie durch die mangelnde Zähigkeit und insbesondere die mangelnde Durchstoßfestigkeit dünnerer Folien beschränkt. Verwendet man zähere Werkstoffe, so sind diese oft teurer und führen im Allgemeinen auch zu einer deutlich verminderten Steifigkeit, was das Verhalten auf vielen Abpackmaschinen negativ beeinflusst und geringere Liniengeschwindigkeiten erfordert.

Aus EP 1 716 830 B1 sind Folien bekannt, welche mittels einer nach der Extrusion durch Heißprägen vorgenommenen Wärmebehandlung und Umkristallisation der Polymermischung eine deutliche Verbesserung der mechanischen Eigenschaften erfahren. Diese Folien bestehen aus Gemischen aus Polyethylen (PE) und Polypropylen (PP), wobei das Polyethylen stets die Überschuss-komponente (max. 70 Teile PP bezogen auf 100 Teile PE, d.h. maximal 42 Gew.-% Polypropylenanteil) und somit die Matrix bildet. Diese Folien werden aufgrund ihrer hohen Weichheit für Hygieneanwendungen eingesetzt. Aufgrund ihrer relativ geringen Steifigkeit (auch im Vergleich zu den Messwerten vor der Wärmebehandlung) kommt ein Einsatz als Verpackungsfolie nicht in Betracht und ist auch nicht erwähnt.

In der Wärme behandelte Platten und Folien für Verpackungszwecke werden in EP 616 880 B1 beschrieben. Jedoch wird lediglich eine Verbesserung der optischen Eigenschaften, wie Transparenz angestrebt. Auch werden keine Mischungen aus unterschiedlichen Polymeren in den Beispielen genannt. Es handelt sich um Platten und Folien aus reinem Polypropylen.

Die GB 1087036 betrifft die Herstellung von Packband aus Kunststoffmischungen, z.B. aus PP und PE. Alle dort genannten Produkte werden durch Verstrecken hergestellt, z.B. bei einem Reckverhältnis von 1:5 bis 1:8 bei Temperaturen von 95-105°C, also unterhalb der Schmelztemperatur des Polyethylens. Das Ergebnis sind hochsteife Packbänder mit äußerst geringer Bruchdehnung (von 19-25% in den Beispielen), die in Herstellung und Eigenschaften nicht mit den erfindungsgemäßen Produkten vergleichbar sind.

Die GB 1276023 beschreibt eine biaxial gereckte Folie aus Mischungen von PE und PP. Auch diese Folien sind sehr steif und wenig dehnfähig (max. 80% Bruchdehnung).

Die EP 452 813 A2 betrifft die Herstellung von Formteilen durch Kaltumformen von Mischungen aus PP und PE bei Temperaturen zwischen den Schmelzpunkten der beiden Komponenten. Ziel ist es dabei, wärmeformstabile Bauteile zu erhalten. Eine etwaige Verbesserung der mechanischen Eigenschaften oder auch die Übertragung des Prozesses auf Folien ist nicht erwähnt.

US 5 024 799 beschreibt ein spezielles Verfahren zur Herstellung gereckter und gleichzeitig geprägter Folien aus Polyolefinen. Der simultane Reckund Prägeprozeß findet nach dem allgemeinen Stand der Technik zur damaligen Zeit bei Temperaturen unterhalb des Schmelzpunktes, bei Polyolefinen bei 200°F (93°C) statt. Über den Einfluß der Temperatur auf die Produkteigenschaften und bevorzugte Mischungsverhältnisse macht die Schrift keine Angaben.

Die WO 00/58090 beschreibt eine dreischichtige Polyolefin-Castfolie oder orientierte Polyolefinfolie, welche nach einem Prägeschritt zur späteren Metallisierung vorgesehen ist. Dabei wird auf einer wärmeformbeständigen Polypropylen-Kernschicht mindestens eine leichter prägbare Aussenschicht aus einem Polyolefin mit einem geringeren Schmelzpunkt eingesetzt. Weder Mischungen aus unterschiedlichen Polyolefinen noch der Einfluß der Prägetemperatur werden beschrieben.

Ziel der Erfindung ist es, Folien mit einer signifikant erhöhten Durchstoß-und Weiterreißfestigkeit bei gleichzeitig kaum veränderter Steifigkeit und Festigkeit im Vergleich zu heute üblichen Verpackungsfolien bereitzustellen. Dabei wird die Folie erfindungsgemäß weder uni- noch biaxial gereckt. Darunter ist zu verstehen, dass die Folienbahn nicht um mehr als 10% in einer der beiden Richtungen unter Temperatureinfluß ausgezogen wird.

Überraschend wurde nun gefunden, dass Folien mit PP als Matrixkomponente (Gesamtanteil in mindestens einer Schicht mindestens 45 %), gemischt mit Polyethylen, nach einer Wärmebehandlung bei Temperaturen zwischen den Schmelzpunkten der verwendeten Komponenten über hervorragende Durchstoß- und Weiterreißfestigkeiten bei gleichzeitig erhöhter Steifigkeit gegenüber Verpackungsfolien aus Polyethylen und den aus EP 1 716 830 B1 bekannten Hygienefolien verfügen.

Im Vergleich zu typischen Verpackungsfolien aus Gemischen von Polyethylen niederer Dichte (LDPE) und linearem Polyethylen niederer Dichte (LLDPE) wurde bei erhöhter oder fast gleicher Steifigkeit eine um bis über das 3-fache erhöhte Zähigkeit gefunden. Dies wurde durch den Polypropylenanteil von mindestens 45 % in mindestens einer Schicht erreicht. Vorzugsweise beträgt der PP-Anteil mindestens 50 %, insbesondere mindestens 60 %. Im Falle der Verwendung von Copolymeren oder heterophasigen Gemischen aus PP und PE wird deren PE-Comonomeranteil erfindungsgemäß der PE-Phase zugerechnet. Propylen-Ethylen-Copolymere, insbesondere Randomcopolymere, können somit das alleinige Material von erfindungsgemäßen Folien sein.

Bei einschichtigen Folien sind Gemische von 45 bis 95 % PP mit 55 bis 5% PE bevorzugt, insbesondere Gemische von 55 bis 80 % PP mit 20 bis 45 % PE.

Vorteilhaft ist ein Mehrschichtaufbau. Hierbei kann eine Schicht aus PP und eine zweite Schicht aus PE vorgesehen werden. Ebenso kann in einer oder mehreren oder allen Schichten ein Gemisch von PP und PE vorliegen. Wichtig ist, dass erfindungsgemäß wenigstens eine Schicht mit wenigstens 45 % PP vorhanden ist und in dieser oder in wenigstens einer weiteren Schicht PE vorliegt. Erfindungsgemäß brauchbar sind daher mehrschichtige Folien mit einer ersten Schicht mit 45 bis 100 % PP und einer oder mehreren weiteren Schichten mit bis zu 100 % PE. Bevorzugt liegt in allen drei Schichten ein Gemisch von PP und PE vor. Ein Aufbau aus 100 % PP-Homopolymer coextrudiert mit Deckschichten aus reinem PE bietet nach einer Heißprägung bei den erfindungsgemäßen Temperaturen nur eine geringere Verbesserung der mechanischen Eigenschaften.

Bevorzugt ist ein mindestens dreischichtiger Aufbau, wobei das PP in einer mittleren oder der Kernschicht vorliegt und die Deckschichten aus PE einen geringeren PP-Anteil von < 30 % haben bis hin zu PP-freien Deckschichten. Die Kernschicht kann vollständig aus PP erstellt sein, oder aus einem Gemisch von mindestens 45 % PP mit bis zu 55 % PE, vorzugsweise aus einem Gemisch mit 50 bis 95 % PP und 5 bis 50 % PE, insbesondere 50 bis 90 % PP und 10 bis 50 % PE. Es ist weiter bevorzugt, wenn die Kernschicht dicker ist, als die Deckschichten.

Besonders bevorzugt sind mehrschichtige, insbesondere dreischichtige Folien mit einer ersten Schicht mit 45 bis 100 %, vorzugsweise 60 bis 90 % PP und wenigstens einer weiteren Schicht aus PE, oder einem Gemisch von PE mit bis zu 45 %, bevorzugt maximal 30 % PP.

Es versteht sich, dass bei den erfindungsgemäßen Folien in allen Schichten übliche Additive, Füllstoffe etc. in den jeweils bekannten Mengen und in einem untergeordneten Anteil von bis zu 20 Gew.-%, in der Regel nicht mehr als 10 Gew.-% und insbesondere nicht mehr als 5 Gew.-% andere Polymere zugesetzt sein können.

Soweit nichts anderes angegeben ist, umfasst der Begriff Polymer Homo- und Copolymere sowie Mischungen aus zwei oder mehr Polymeren. In der Regel weisen Polymere eine Molmasse von mindestens 10.000, typischerweise von einigen 10.000 bis einigen 100.000 g/mol auf. Bei Copolymeren kann es sich z.B. um statistische (Random), alternierende, Block- sowie Pfropfcolpolymere handeln.

Der Begriff Folie bezeichnet im Rahmen der vorliegenden Erfindung flächige Gebilde, deren Breite und Länge die Dicke um ein vielfaches übersteigt. Die Dicke beträgt in der Regel unter einem Millimeter bis hin zu wenigen Mikrometern.

Als PP eignen sich Homopolymere, Random-Copolymere und BlockCopolymere. Vorzugsweise kommen PP-Copolymere, insbesondere Random-Copolymere zum Einsatz. PP-Randomcopolymere (Markennamen z.B. Borclear von Borealis, Clyrell von Lyondellbasell) mit einem Comonomeranteil von 5 bis 30 Gew.-% sind dabei besonders bevorzugt. Als Comonomere können Ethylen, Buten, Hexen oder Octen verwendet werden. Bevorzugtes Comonomer ist Ethylen, insbesondere in Mengen von 5 bis 30 Gew.-%. Der statistische Einbau der Comonomere in die Polymerkette führt gegenüber PP-Homopolymeren und PP-Blockcopolymeren zu einer deutlichen Absenkung der Schmelztemperatur (<150°C) und besserer Mischbarkeit mit dem PE-Anteil, was erfindungsgemäß vorteilhaft ist.

Als PE eignen sich z.B. LDPE, LLDPE und Gemische von zwei oder mehr Ethylenpolymeren. Ein bevorzugtes PE ist ein Gemisch aus LDPE und LLDPE, vorzugsweise ein Gemisch aus 50 bis 90 % LDPE und 50 bis 10 % LLDPE, insbesondere aus 60 bis 80 % LDPE und 40 bis 20 % LLDPE. Weitere bevorzugte PE sind Gemische aus LDPE, LLDPE, und Ethylenvinylacetat (EVA). Das Comonomer im LLDPE ist vorzugsweise ein Buten, Hexen oder Octen, es kann sich um an sog. Metailocen bzw. Single Site Katalysatoren hergestelltes mLLDPE handeln.

Die Prägetemperatur liegt erfindungsgemäß zwischen den Schmelztemperaturen der PE- und der PP-Komponente. Unter Schmelzpunkt oder Schmelztemperatur wird im Rahmen der vorliegenden Anmeldung im Hinblick auf die polymeren Materialien diejenige Temperatur verstanden, bei welcher der Schubmodul des Materials gegen null geht. Soweit es sich um Polymere mit kristallinen Anteilen oder um kristalline Polymere handelt, sind bei dieser Temperatur (auch) die kristallinen Bereiche geschmolzen. In Bezug auf eine Lage, z.B. eine Folie, ist der Schmelzpunkt diejenige Temperatur, bei der die Lage insgesamt aufschmilzt. Sofern die Lage nicht nur aus einem Material besteht, kommt es nicht darauf an, dass sämtliche Komponenten für sich eine Schmelztemperatur bei oder unterhalb des Schmelzpunktes der Lage aufweisen, vielmehr entspricht der Schmelzpunkt der Lage regelmäßig der Schmelztemperatur der thermoplastischen Hauptkomponente. So weist z.B. eine Folie enthaltend 60 % Calciumcarbonat, 32 % eines Polymers mit einer Kristallitschmelztemperatur von 138°C und 8 % eines Polymers mit einer Kristallitschmelztemperatur von 158°C einen Schmelzpunkt von etwa 138°C auf.

Erstaunlicherweise zeichnen sich die erfindungsgemäßen Folien nicht nur durch ihre guten mechanischen Eigenschaften (ausgewogenes Steifigkeits/Zähigkeits-Verhältnis), sondern auch durch ihre gute Verschweißbarkeit und das geradlinige Rissverhalten bei gleichzeitig gegenüber ungeprägten Folien erhöhter Weiterreißfestigkeit aus. Beide Eigenschaften sind bei Verpackungsfolien erwünscht.

Die erfindungsgemäßen Folien weisen eine Festigkeit von 30 bis 70 N/mm², eine Steifigkeit von 150 bis 600 N/mm² und eine Bruchdehnung von 400 bis 1200 % auf.

Produkte mit einer höheren Steifigkeit (und einem höheren Gesamt-Polypropylenanteil) von etwa größer 300 N/mm² sind in Dicken von 20 bis 80 µm insbesondere als Verpackungsfolien und technische Folien einsetzbar, während Produkte mit einer geringeren Steifigkeit als 400 N/mm² (und einem geringeren Gesamt-Polypropylenanteil und/oder höherem Copolymeranteil insbesondere an PP-Random-Copolymeren mit Ethylen) in Dicken von unter 20 µm auch als dünnere Alternative zu den Hygienefolien nach EP 1 716 830 B1 in Betracht kommen, da sie bei gleicher Weichheit eine höhere Festigkeit, Steifigkeit und Durchstoß- sowie Weiterreißfestigkeit aufweisen.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

Folgende Materialien wurden verwendet:

| Material | Beschreibung | Dichte bei 23 °C | MFI nach ISO 1133* | DSC-Schmelzpunkt ISO 3146 |
|---|---|---|---|---|
| LDPE | | 0,923 kg/dm³ | 0,75 g/10 min | 113 °C |
| LLDPE1 | C6 als Comonomer | 0,92 kg/dm³ | 0,9 g/10 min | 127 °C |
| LLDPE2 | C8 als Comonomer | 0,92 kg/dm³ | 1,1 g/10 min | 127 °C |
| PP1 | Random-Copolymer mit 9 Gew.-% Ethylen | 0,91 kg/dm³ | 1,5 g/10 min | 140 °C |
| PP2 | Heterophasiges Blockcopolymer mit 5 Gew.-% Comonomer | 0,905 kg/dm³ | 3,0 g/10 min | 162 °C |
| PP3 | Heterophasiges Blockcopolymer mit 2 % Comonomer | 0,900 kg/dm³ | 0,8 g/10 min | 165 °C |
| PP4 | Heterophasiges Random-Copolymer mit 10 Gew.-% Comonomer | 0,905 kg/dm³ | 1,0 g/10 min | 140 °C |

| | | | | |
|---|---|---|---|---|
| *MFI gemessen bei 190°C / 2,16 kg für PE und 230°C / 2,16 kg für PP) | | | | |

### Beispiel 1

Es wurde eine symmetrische Folie mit einer Kernschicht von 21 µm und zwei Deckschichten von 12 µm im Blasfolien-Verfahren hergestellt. Die Kernschicht bestand aus PP1, die Deckschichten aus einer Mischung von 70 % LDPE und 30 % LLDPE1. Die Ausgangsfolie wurde auf 130 °C erwärmt und durch einen gekühlten Walzenspalt gefahren. Für die Folie wurden Festigkeit, Steifigkeit (Sekantenmodul bei 5 % Dehnung aus der Spannungs-Dehnungskurve abgelesen) und Bruchdehnung jeweils in Maschinen- und Querrichtung nach ISO 527 an 15 mm breiten Streifen bei einer Abzugsgeschwindigkeit von 500 mm/min gemessen.

Die maximale Impacthöhe wird wie folgt gemessen: Die Folie wird einzeln, planliegend und faltenfrei in das Prüfgerät eingespannt. Ein Metallbolzen mit einem Gewicht von 100 g wird aus unterschiedlichen Höhen auf die eingespannte Folie fallen gelassen. Ein Versuch gilt als schlecht, wenn die Folie an einem Punkt vollständig durchtrennt ist (Riss oder Loch), sonst als gut. Es sind stets mehrere Versuche durchzuführen. Als Impacthöhe wird diejenige Fallhöhe bezeichnet, bei der zwei Versuche gut und zwei Versuche schlecht sind. Zur Bestimmung wird zunächst die ungefähre Höhe ermittelt und dann in 5 cm Schritten die Höhe verringert, wenn drei oder mehr Versuche schlecht sind bzw. erhöht wenn mehr als drei Versuche gut sind.

Die Ergebnisse sind in Tabelle 2 aufgeführt.

### Vergleichsbeispiel 1

Es wurde eine Ausgangsfolie wie in Beispiel 1 hergestellt. Die Prägung erfolgte jedoch bei 114 °C, d.h. unterhalb der Schmelzetemperatur auch der Polyethylene. Die mechanischen Eigenschaften sind ebenfalls in Tabelle 2 angegeben.

### Beispiel 2

Es wurde eine Folie wie in Beispiel 1 hergestellt, jedoch mit einer Kernschicht aus 60 % PP1 und 40 % LLDPE2. Die mechanischen Eigenschaften sind ebenfalls in Tabelle 2 angegeben.

### Vergleichsbeispiel 2

Es wurde eine Folie wie in Beispiel 1 hergestellt, jedoch mit 25 % PP1 und 75 % LLDPE2 in der Kernschicht. Die mechanischen Eigenschaften sind ebenfalls in Tabelle 2 angegeben.

### Beispiel 3

Es wurde eine Folie wie in Beispiel 1 hergestellt, jedoch mit einer Kernschicht aus 100 % PP2 und einer Prägung bei 153 °C. Die mechanischen Eigenschaften sind ebenfalls in Tabelle 2 angegeben.

### Vergleichsbeispiel 3

Es wurde eine Folie wie in Beispiel 1 hergestellt, jedoch mit 70 % LDPE und 30 % LLDPE2 in der Kernschicht. Es erfolgte keine Prägung. Die mechanischen Eigenschaften sind ebenfalls in Tabelle 2 angegeben. Diese Folie entspricht den derzeit häufig verwendeten Verpackungsfolien.

**Tabelle 2: Anwendung Verpackungsfolien 45 µm**

| **Beispiel** | **Aufbau Kern** | **Prägetemperatur [°C]** | **Festigkeit [N/mm²]** | **Steifigkeit [N/mm²]** | **Bruchdehnung [%]** | **max. Impact-höhe [mm]** |
|---|---|---|---|---|---|---|
| Beispiel 1 | 100 % PP1 | 130 | 36,9 / 30,9 | 265 / 256 | 473 / 634 | 1200 |
| Vergleichsbeispiel 1 | 100 % PP1 | 114 | 31,4 / 27,6 | 278 / 261 | 421 / 650 | 500 |
| Beispiel 2 | 60 % PP1 | 130 | 34,7 / 36.5 | 164 / 174 | 567 / 867 | 1500 |
| | 40 % LDPE | | | | | |
| Vergleichsbeispiel 2 | 25 % PP1 | 130 | 34,1 / 30,2 | 111 / 103 | 540 / 775 | 1250 |
| | 75 % LDPE | | | | | |
| Beispiel 3 | 100 % PP2 | 153 | 38,6 / 27,6 | 463 / 385 | 483 / 605 | 1050 |
| Vergleichsbeispiel 3 | 70 % LDPE | ungeprägt | 26,1 / 27,1 | 163 / 157 | 423 / 672 | 450 |
| | 30 % LLDPE2 | | | | | |

### Beispiel 4

Es wurde eine symmetrische Folie mit einer Kernschicht von 29 µm und zwei Deckschichten von 8 µm im Blasfolien-Verfahren hergestellt. Die Kernschicht und die Deckschichten bestanden aus PP1. Die Ausgangsfolie wurde auf 130 °C erwärmt und durch einen gekühlten Walzenspalt gefahren. Für die Folie wurden wie oben Festigkeit, Steifigkeit (Sekantenmodul bei 5 % Dehnung aus der Spannungs-Dehnungskurve abgelesen) und Bruchdehnung gemessen und die maximale Impacthöhe bestimmt. Zusätzlich wurde die Weiterreißfestigkeit in Maschinen- und Querrichtung nach ISO 527 an 15 mm breiten Streifen bei einer Abzugsgeschwindigkeit von 500 mm/min gemessen. Die mechanischen Eigenschaften sind ebenfalls in Tabelle 3 angegeben.

### Vergleichsbeispiel 4

Es wurde eine Folie wie in Beispiel 4 hergestellt, jedoch ohne Prägung. Die mechanischen Eigenschaften sind ebenfalls in Tabelle 3 angegeben.

### Beispiel 5

Es wurde eine Folie wie in Beispiel 4 hergestellt, jedoch mit einer Kernschicht aus PP2 und Deckschichten aus einer Mischung von 70 % LDPE und 30 % LLDPE1. Die mechanischen Eigenschaften sind ebenfalls in Tabelle 3 angegeben.

### Vergleichsbeispiel 5

Es wurde eine Folie wie in Beispiel 5 hergestellt, jedoch ohne Prägung. Die mechanischen Eigenschaften sind ebenfalls in Tabelle 3 angegeben.

**Tabelle 3: Anwendung Verpackungsfolien 45µm**

| **Beispiel** | **Folien-aufbau** | **Prägetemperatur [°C]** | **Festig-keit [N/mm²]** | **Steifigkeit [N/mm²]** | **Bruchdehnung [%]** | **max. Im-pact-höhe [mm]** | **Weiterreiß-festigkeit [mN]** |
|---|---|---|---|---|---|---|---|
| Beispiel 4 | 100% PP1 in allen Schichten | 130 | 60,5/45,5 | 398/319 | 589/649 | 1000 | 385/12395 |
| Vergleichsbeispiel 4 | 100% PP1 in allen Schichten | ungeprägt | 48,5/44,1 | 398/423 | 688/708 | 600 | 314/345 |
| Beispiel 5 | Deckschichten 70%LDPE/ 30%LLDPE1; Mittelschicht PP2 | 130 | 53,6141,0 | 443/379 | 697/767 | 1400 | 2196/11129 |
| Vergleichsbeispiel 5 | Deckschichten 70%LDPE/ 30%LLDPE1; Mittelschicht PP2 | ungeprägt | 49,3140,0 | 451/417 | 910/921 | 950 | 439/5513 |

### Beispiel 6

Es wurde eine symmetrische Folie mit einer Kernschicht von 6,9 µm und zwei Deckschichten von 3,3 µm im Blasfolien-Verfahren hergestellt. Die Kernschicht bestand aus PP4, die Deckschichten aus einer Mischung von 46 % LDPE, 30 % LLDPE2 und 22 % PP3. Die Ausgangsfolie wurde auf 139 °C erwärmt und durch einen gekühlten Walzenspalt gefahren. Für die Folie wurden Festigkeit, Steifigkeit (Sekantenmodul bei 5 % Dehnung aus der Spannungs-Dehnungskurve abgelesen) und Bruchdehnung sowie die maximale Impacthöhe wie oben angegeben bestimmt. Die mechanischen Eigenschaften fasst Tabelle 4 zusammen.

### Vergleichsbeispiel 6

Es wurde eine Folie wie in Beispiel 6 hergestellt, jedoch ohne Prägung. Die mechanischen Eigenschaften sind ebenfalls in Tabelle 4 angegeben.

### Beispiel 7

Es wurde eine Folie wie in Beispiel 6 hergestellt, jedoch mit einer Kernschicht aus einem Gemisch von 2/3 PP4 und 1/3 PP3. Die Prägung erfolgte bei 134 °C. Die mechanischen Eigenschaften sind ebenfalls in Tabelle 4 angegeben.

### Vergleichsbeispiel 7

Es wurde eine Folie wie in Beispiel 7 hergestellt, jedoch ohne Prägung. Die mechanischen Eigenschaften sind ebenfalls in Tabelle 4 angegeben.

### Beispiel 8

Es wurde eine Folie wie in Beispiel 6 hergestellt, jedoch mit einer Kernschicht aus 100 % PP3. Die Prägung erfolgte bei 134 °C. Die mechanischen Eigenschaften sind ebenfalls in Tabelle 4 angegeben.

### Vergleichsbeispiel 8

Es wurde eine Folie wie in Beispiel 8 hergestellt, jedoch ohne Prägung. Die mechanischen Eigenschaften sind ebenfalls in Tabelle 4 angegeben.

### Vergleichbeispiel 9

Es wurde eine Folie wie in Beispiel 6 hergestellt, jedoch mit einem Gemisch von 46 % LDPE, 30 % LLDPE2 und 22 % PP3 in der Kernschicht. Die Prägung erfolgte bei 126 °C. Die mechanischen Eigenschaften sind ebenfalls in Tabelle 4 angegeben.

### Vergleichsbeispiel 10

Es wurde eine Folie wie in Vergleichsbeispiel 9 hergestellt, jedoch ohne Prägung. Die mechanischen Eigenschaften sind ebenfalls in Tabelle 4 angegeben.

**Tabelle 4: Anwendung Hygienefolien 13,5 µm**

| **Beispiel** | **Aufbau Kern** | **Prägetemperatur [°C]** | **Festigkeit [N/mm²]** | **Steifigkeit [N/mm²]** | **Bruch-dehnung [%]** | **max. Impacthöhe [mm]** |
|---|---|---|---|---|---|---|
| Beispiel 6 | 100% PP4 | 139 | 57,2 | 226 | 397 / 743 | 510 |
| Vergleichsbeispiel 6 | 100% PP4 | nein | 54,0 | 313 | 459 / 760 | 240 |
| Beispiel 7 | 66% PP4 und 33% PP3 | 134 | 66,3 | 271 | 405 / 779 | 400 |
| Vergleichsbeispiel 7 | 66% PP4 und 33% PP3 | nein | 55,0 | 336 | 481 / 752 | 190 |
| Beispiel 8 | 100% PP3 | 134 | 69,2 | 302 | 420 / 719 | 230 |
| Vergleichsbeispiel 8 | 100% PP3 | nein | 59,9 | 395 | 431 / 625 | 150 |
| Vergleichsbeispiel 9 | 46% LDPE / 30% | nein | 43,3 | 309 | 277 / 645 | 140 |
| | LLDPE2 / 22% PP3 | | | | | |
| Vergleichsbeispiel 10 | 46% LDPE / 30% | 126 | 46,8 | 236 | 248 / 691 | 230 |
| | LLDPE2 / 22% PP3 | | | | | |

Die Ergebnisse zeigen, dass sowohl die Zusammensetzung als auch die Heißprägung für den Erfolg wesentlich sind. So steigt die maximale Impacthöhe bei Einsatz von 100 % PP1 (Randomcopolymer) auf 1200 mm verglichen mit 450 mm bei der üblichen Mischung aus LDPE und LLDPE (Vergleichsbeispiel 3). Dabei bleibt die Bruchdehnung auf gleichem Niveau, während sich Festigkeit und Steifigkeit beachtlich steigern. Die gleiche Folie ergibt bei Prägetemperaturen unterhalb des Schmelzpunktes der am niedrigsten schmelzenden Komponente (Vergleichsbeispiel 1) kaum noch bessere Festigkeit oder Impacthöhe als die Referenzfolie. Die gewünschte Reduzierung der Foliendicke ist bei Vergleichsbeispiel 1 nicht möglich.

Ein Vergleich bezüglich der Menge an PP im Kern, Beispiel 1, 2 und Vergleichsbeispiel 2, demonstriert den Verlust an Steifigkeit bei zu geringem PP-Gehalt. Durch Verwendung eines PP-Block-Copolymeren, PP2 in Beispiel 3, lassen sich die Festigkeit und die Steifigkeit sehr stark steigern, die Impacthöhe ist deutlich höher als das Niveau der üblichen Verpackungsfolien (Vergleichsbeispiel 3).

Tabelle 3 zeigt den Einfluß der Heißprägung bei Temperaturen zwischen den Schmelzpunkten der PP- und der PE-Komponenten. Durch den Prozeß lassen sich die Festigkeit, insbesondere in MD-Richtung und vor allem die Durchstoßfestigkeit und Weiterreißfestigkeit signifikant steigern, bei gleichzeitig fast unveränderter Steifigkeit und Bruchdehnung.

Tabelle 4 zeigt den Einfluß des gegenüber dem Stand der Technik erhöhten PP-Gehaltes und dem Vorhandensein einer PP-Matrix in mindestens einer Schicht. Insbesondere durch Einsatz eines flexiblen, heterophasigen Random-Copolymeren in hohen Anteilen in mindestens einer Schicht (Beispiele 6 und 7) kommt es nach dem Prägeprozeß zu einer Steigerung der Durchstoßfestigkeit um mehr als 100 %. Die Verbesserungen nach dem Softprägeprozeß nach dem Stand der Technik sind dagegen deutlich geringer (Vergleichsbeispiele 9 und 10). Weiterhin bieten alle erfindungsgemäßen Beispiele 6 bis 8 mit einem PP-Gehalt von über 45 % in der Mittelschicht (und auch im Gesamtaufbau der Folie) verbesserte Festigkeiten, Steifigkeiten und Bruchdehnungen gegenüber den Vergleichsbeispielen mit geringerem PP-Anteil in allen Schichten. Dies war nach EP 1 716 830 B1 nicht zu erwarten.

Die Messergebnisse zeigen somit, dass mit den erfindungsgemäßen Folien, bei denen sowohl eine Heißprägung als auch ein Anteil von mindestens 45 % PP und damit eine PP-Matrix in mindestens einer Schicht vorliegt, wesentlich verbesserte Folien bereitgestellt werden konnten. Somit lassen sich im Vergleich zu den bisher üblicherweise verwendeten Folien die Dicken reduzieren, bzw. die Verpackung oder das Hygieneprodukt sicherer machen.

## Patentansprüche

1. Folie mit einem Sekanten-E-Modul bei 5% Dehnung, gemessen nach ISO 527 von 150-600 N/mm², einer Bruchfestigkeit nach ISO 527 von 30-70 N/mm² und einer Bruchdehnung nach ISO 527 von 400-1200 %, umfassend wenigstens eine Schicht mit einem Gehalt an Polypropylen von wenigstens 45 Gew.-% und in dieser oder einer weiteren Schicht einen Gehalt an Polyethylen, erhältlich durch Herstellung einer Ausgangsfolienbahn, Erwärmung der Ausgangsfolienbahn bis zum schmelzeflüssigen Zustand des Polyethylen, jedoch unterhalb des schmelzeflüssigen Zustandes des Polypropylen und Führen der erwärmten Ausgangsfolienbahn durch einen gekühlten Walzenspalt.

2. Folie gemäß Anspruch 1, **dadurch gekennzeichnet, dass** die Folie einschichtig ist.

3. Folie gemäß Anspruch 2, **dadurch gekennzeichnet, dass** die eine Schicht maximal 55 Gew.-%, vorzugsweise maximal 40 Gew.-%, insbesondere maximal 20% Polyethylen enthält.

4. Folie gemäß einem der Ansprüche 2 bis 3, **dadurch gekennzeichnet, dass** die Polypropylen -Komponente der einen Schicht überwiegend aus einem Propylen -Randomcopolymeren mit einem Schmelzpunkt unter 150°C besteht.

5. Folie gemäß Anspruch 1, **dadurch gekennzeichnet, dass** die Folie mehrschichtig, vorzugsweise dreischichtig ist und in allen Schichten ein Gemisch aus Polypropylen und Polyethylen vorliegt.

6. Folie gemäß Anspruch 5, **dadurch gekennzeichnet, dass** die Folie eine Kernschicht mit einem Gehalt an Polypropylen von wenigstens 45 Gew.-% und ein oder zwei Deckschichten mit einem Gehalt an Polyethylen von wenigstens 55, bevorzugt wenigstens 70 Gew.-% umfasst.

7. Folie gemäß mindestens einem der vorhergehenden Ansprüche, **dadurch gekennzeichnet, dass** das Polypropylen ausgewählt ist unter Homopolymeren, Random-Copolymeren, Block-Copolymeren, heterophasischen Block-Copolymeren oder Gemischen von zwei oder mehreren davon.

8. Folie gemäß Anspruch 7, **dadurch gekennzeichnet, dass** das Polypropylen ein Copolymer mit Ethylen, vorzugsweise ein Random-Copolymer mit Ethylen und insbesondere ein Random-Copolymer mit weniger als 30 Gew.-% Ethylen als Comonomer und einem Schmelzpunkt unter 150°C ist.

9. Folie gemäß mindestens einem der vorhergehenden Ansprüche, **dadurch gekennzeichnet, dass** das Polyethylen ausgewählt ist unter Polyethylen niederer Dichte, linearem Polyethylen niederer Dichte mit Buten, Hexen oder Octen als Comonomer, und Gemischen von zwei oder mehreren davon oder Gemischen davon mit Ethylenvinylacetat.

10. Folie gemäß Anspruch 9, **dadurch gekennzeichnet, dass** das Polyethylen ein Gemisch von Polyethylen niederer Dichte mit linearem Polyethylen niederer Dichte mit Buten, Hexen oder Octen als Comonomer ist.

11. Folie gemäß einem der Ansprüche 4 bis 10, **dadurch gekennzeichnet, dass** der Gesamt-Polypropylenanteil in der Folie mindestens 45 Gew.-% beträgt.

12. Folie gemäß mindestens einem der Ansprüche 4 bis 11, **dadurch gekennzeichnet, dass** die Deckschichten dünner als die Kernschicht sind.

13. Folie gemäß mindestens einem der vorhergehenden Ansprüche, **dadurch gekennzeichnet, dass** die Ausgangsfolienbahn eine Dicke im Bereich von 5 bis 80 µm, vorzugsweise von 20 bis 60 µm aufweist.

14. Verfahren zur Herstellung einer Folie gemäß einem der Ansprüche 1 bis 13, **dadurch gekennzeichnet, dass** eine Ausgangsfolienbahn umfassend wenigstens eine Schicht mit einem Gehalt an Polypropylen von wenigstens 45 Gew.-% und mit einem Gehalt an Polyethylen in derselben oder einer weiteren Schicht hergestellt wird, die Ausgangsfolienbahn bis zum schmelzeflüssigen Zustand des Polyethylen, jedoch unterhalb des schmelzeflüssigen Zustandes des Polypropylen erwärmt wird und die erwärmte Ausgangsfolienbahn durch einen gekühlten Walzenspalt geführt wird.

15. Verfahren gemäß Anspruch 14, **dadurch gekennzeichnet, dass** die Kühlwalzen eine glatte oder eine strukturierte Oberfläche aufweisen.

16. Verwendung einer Folie gemäß mindestens einem der Ansprüche 1 bis 13 als Verpackungsfolie, Oberflächenschutzfolie oder Hygienefolie.

## Claims

1. A film having a secant-E-modulus at 5% elongation, as measured according to ISO 527, of 150-600 N/mm², a tensile strength according to ISO 527 of 30-70 N/mm² and a percent elongation at break according to ISO 527 of 400-1200%, comprising at least one layer having a polypropylene content of at least 45 % by weight and a polyethylene content in the same layer or in a further layer, that is obtained by producing a starting film web, heating the starting film web to the molten state of the polyethylene, but to below the molten state of the polypropylene and passing the heated starting film web through a cooled roller nip.

2. The film according to claim 1, **characterized in that** the film is a single layer film.

3. The film according to claim 2, **characterized in that** the single layer contains a maximum of 55 % by weight, preferably a maximum of 40 % by weight, more preferred a maximum of 20% of polyethylene.

4. The film according to one of the claims 2 to 3, **characterized in that** the polypropylene component of the single layer is composed predominantly of a propylene random copolymer having a melting point below 150°C.

5. The film according to claim 1, **characterized in that** the film comprises multiple layers, preferably three layers, and a mixture of polypropylene and polyethylene is present in all layers.

6. The film according to claim 5, **characterized in that** the film comprises a core layer having a polypropylene content of at least 45 % by weight, and one or two cover layers having a polyethylene content of at least 55, preferably at least 70 % by weight.

7. The film according to at least one of the preceding claims, **characterized in that** the polypropylene is selected from homopolymers, random copolymers, block copolymers, heterophasic block copolymers or mixtures of two or more thereof.

8. The film according to claim 7, **characterized in that** the polypropylene is a copolymer with ethylene, preferably a random copolymer with ethylene, and, more particularly, a random copolymer having less than 30 % by weight of ethylene as comonomer and a melting point below 150°C.

9. The film according to at least one of the preceding claims, **characterized in that** the polyethylene is selected from low-density polyethylene, linear low-density polyethylene having butene, hexene or octene as comonomer, and mixtures of two or more thereof or mixtures thereof with ethylene vinyl acetate.

10. The film according to claim 9, **characterized in that** the polyethylene is a mixture of low-density polyethylene with linear low-density polyethylene having butene, hexene or octene as comonomer.

11. The film according to one of the claims 4 to 10, **characterized in that** the total portion of polypropylene in the film is at least 45 % by weight.

12. The film according to at least one of the claims 4 to 11, **characterized in that** the cover layers are thinner than the core layer.

13. The film according to at lest one of the preceding claims, **characterized in that** the starting film web has a thickness in the range from 5 to 80 µm, preferably from 20 to 60 µm.

14. A method for the production of a film according to one of the claims 1 to 13, **characterized in that** a starting film web comprising at least one layer having a polypropylene content of at least 45 % by weight and a polyethylene content in the same layer or in a further layer is produced, the starting film web is heated to the molten state of the polyethylene, but to below the molten state of the polypropylene and the heated starting film web is passed through a cooled roller nip.

15. The method according to claim 14, **characterized in that** the cooling rollers have a smooth surface or a structured surface.

16. The use of a film according to at least one of the claims 1 to 13 as packaging film, surface protective film or hygiene film.

## Revendications

1. Feuille présentant un module d'élasticité sécant compris entre 150 et 600 N/mm² lorsque celui-ci est mesuré à 5 % d'allongement selon ISO 527, une résistance à la rupture comprise entre 30 et 70 N/mm² selon ISO 527, et un allongement à la rupture compris entre 400 et 1 200 % selon ISO 527, ladite feuille comprenant au moins une couche dont la teneur en polypropylène est supérieure ou égale à 45 % en poids, cette couche ou une autre couche présentant une teneur en polyéthylène, ladite feuille pouvant être obtenue en fabriquant une feuille continue de départ, en chauffant la feuille continue de départ jusqu'à ce que le polyéthylène adopte son état liquide en fondant, alors que le polypropylène n'atteint pas encore son état liquide en fondant, et en faisant passer la feuille continue de départ, suite à son chauffage, à travers un interstice refroidi qui est situé entre des cylindres.

2. Feuille selon la revendication 1, **caractérisée en ce que** ladite feuille est constituée d'une couche unique.

3. Feuille selon la revendication 2, **caractérisée en ce que** ladite couche unique contient au maximum 55 % en poids, de préférence au maximum 40 % en poids, notamment au maximum 20 % en poids, de polyéthylène.

4. Feuille selon l'une des revendications 2 à 3, **caractérisée en ce que** le composant polypropylène de ladite couche unique est majoritairement constitué d'un copolymère de propylène de structure aléatoire ayant un point de fusion inférieur à 150 °C.

5. Feuille selon la revendication 1, **caractérisée en ce que** ladite feuille est constituée de plusieurs couches, préférentiellement de trois couches, et que toutes les couches comportent un mélange de polypropylène et de polyéthylène.

6. Feuille selon la revendication 5, **caractérisée en ce que** ladite feuille comprend une couche centrale ayant une teneur en polypropylène supérieure ou égale à 45 % en poids, et une ou deux couches extérieures ayant une teneur en polyéthylène d'au moins à 55 % en poids, préférentiellement d'au moins à 70 % en poids.

7. Feuille selon au moins une des revendications précédentes, **caractérisée en ce que** ledit polypropylène est choisi parmi les homopolymères, les copolymères de structure aléatoire, les copolymères à blocs, les copolymères à blocs à phases hétérogènes, ou les mélanges entre deux ou plusieurs des constituants précités.

8. Feuille selon la revendication 7, **caractérisée en ce que** ledit polypropylène est un copolymère avec l'éthylène, de préférence un copolymère de structure aléatoire avec l'éthylène, et notamment un copolymère de structure aléatoire comportant moins de 30 % en poids d'éthylène à titre de comonomère et ayant un point de fusion inférieur à 150°C.

9. Feuille selon au moins une des revendications précédentes, **caractérisée en ce que** ledit polyéthylène est choisi parmi les polyéthylènes basse densité, le polyéthylène basse densité linéaire comportant du butène, de l'hexène ou de l'octène à titre de comonomère, et les mélanges entre deux ou plusieurs des constituants précités ou leurs mélanges avec l'éthylèneacétate de vinyle.

10. Feuille selon la revendication 9, **caractérisée en ce que** ledit polyéthylène est un mélange entre le polyéthylène basse densité et le polyéthylène basse densité linéaire comportant du butène, de l'hexène ou de l'octène à titre de comonomère.

11. Feuille selon l'une des revendications 4 à 10, **caractérisée en ce que** ladite feuille présente une teneur globale en polypropylène d'au moins 45 % en poids.

12. Feuille selon au moins une des revendications 4 à 11, **caractérisée en ce que** lesdites couches extérieures sont plus fines que ladite couche centrale.

13. Feuille selon au moins une des revendications précédentes, **caractérisée en ce que** la feuille continue de départ présente une épaisseur comprise entre 5 et 80 µm, de préférence entre 20 et 60 µm.

14. Procédé de fabrication d'une feuille selon l'une des revendications 1 à 13, **caractérisé en ce que** l'on fabrique une feuille continue de départ comprenant au moins une couche dont la teneur en polypropylène est d'au moins 45 % en poids, cette couche ou une autre couche présentant une teneur en polyéthylène, que l'on chauffe la feuille continue de départ jusqu'à ce que le polyéthylène adopte son état liquide en fondant, alors que le polypropylène n'atteint pas encore son état liquide en fondant, et que l'on fait passer la feuille continue de départ, suite à son chauffage, à travers un interstice refroidi qui est situé entre des cylindres.

15. Procédé selon la revendication 14, **caractérisé en ce que** les cylindres de refroidissement ont une surface lisse ou structurée.

16. Utilisation d'une feuille selon au moins une des revendications 1 à 13 en tant que feuille d'emballage, feuille de protection de surface ou feuille d'hygiène.
